## Europäisches Patentamt
## European Patent Office
## Office européen des brevets

(11) Veröffentlichungsnummer : **0 137 214**
**B1**

(12) # EUROPÄISCHE PATENTSCHRIFT

(45) Veröffentlichungstag der Patentschrift :
03.12.86

(51) Int. Cl.⁴ : **B 01 D 11/04**, C 07 F 9/10

(21) Anmeldenummer : 84109570.6

(22) Anmeldetag : 10.08.84

(54) Verfahren zur Extraktion formiabiler fliessfähiger Massen.

(30) Priorität : 12.08.83 DE 3329249

(43) Veröffentlichungstag der Anmeldung :
17.04.85 Patentblatt 85/16

(45) Bekanntmachung des Hinweises auf die Patenterteilung : 03.12.86 Patentblatt 86/49

(84) Benannte Vertragsstaaten :
AT BE CH DE FR LI NL SE

(56) Entgegenhaltungen :
EP-A- 0 065 106
DE-A- 3 011 185
DE-A- 3 120 260
US-A- 2 609 277

(73) Patentinhaber : SKW Trostberg Aktiengesellschaft
Dr.-Albert-Frank-Strasse 32 Postfach 1150/1160
D-8223 Trostberg (DE)

(72) Erfinder : Stahl, Egon, Prof. Dr. Dr.
Auf den Hütten 25
D-6600 Saarbrücken-Scheidt (DE)
Erfinder : Quirin, Karl-Werner
Dr.-Prior-Strasse 48
D-6638 Dillingen-Saar (DE)
Erfinder : Hübgen, Adalbert
Blumenstrasse 11
D-6688 Illingen-Welschbach (DE)

(74) Vertreter : Weickmann, Heinrich, Dipl.-Ing. et al
Patentanwälte Dipl.-Ing. H.Weickmann Dipl.-Phys.Dr.
K.Fincke Dipl.-Ing. F.A.Weickmann Dipl.-Chem. B.
Huber Dr.-Ing. H. Liska Dipl.-Phys.Dr. J. Prechtel
Möhlstrasse 22
D-8000 München 80 (DE)

EP 0 137 214 B1

## Beschreibung

Die Erfindung betrifft ein Verfahren zur Extraktion formlabiler fließfähiger Massen mittels Hochdruckextraktion mit einem verflüssigten oder überkritischen Gas sowie eine Vorrichtung zur Durchführung dieses Verfahrens.

Die Hochdruckextraktion ist ein Stofftrennverfahren, bei welchem ein Substrat mit einem durch Anwendung von Druck verdichteten Gas als Lösungsmittel behandelt wird. Das Gas befindet sich dabei entsprechend seinem Phasendiagramm im verflüssigten oder überkritischen Zustand und zeichnet sich hierin durch günstige, je nach eingestellten Druck- und Temperaturbedingungen mehr oder weniger selektive Lösungs- und Massentransporteigenschaften aus. Das günstige Lösungsverhalten derart verdichteter Gase ist seit langem bekannt, die kommerzielle Anwendung ist jedoch noch in einem Entwicklungsstadium und ist auf wenige Beispiele beschränkt, z. B. auf die Entkoffeinierung von Rohkaffe und die Extraktion von Hopfen.

Die Vorteile des Hochdruckverfahrens, insbesondere bei der Anwendung von Kohlendioxid ($CO_2$) als Lösungsmittel, gegenüber den klassischen Extraktionsmethoden mit Benzinfraktionen oder chlorierten Kohlenwasserstoffen sind hinreichend bekannt : $CO_2$ ist nicht brennbar, steht kostengünstig in hohem Ausmaß zur Verfügung, ist physiologisch unbedenklich, kann leicht und vollständig vom Extrakt und Raffinat abgetrennt werden und verursacht keine Umweltprobleme. Bei optimaler Verfahrensführung werden auf Anhieb hochwertige Produkte erhalten, die nachfolgende Raffinations- und Reinigungsschritte ganz oder teilweise überflüssig machen. Dadurch werden Energie und Verfahrenskosten eingespart und Substanzverluste durch Raffination vermieden. Das Hochdruckverfahren stellt deshalb eine wertvolle Alternative zu den herkömmlichen Extraktionsmethoden dar.

Es sind bereits Verfahren bekannt, bei denen durch Anwendung verdichteter Gase im flüssigen oder überkritischen Zustand eine Extraktion von Inhaltsstoffen aus natürlichen Rohstoffen bewirkt wird. So werden gemäß der DE-PS 21 27 611 Gewürzextrakte aus zerkleinertem oder geschrotetem pflanzlichem Ausgangsmaterial gewonnen ; die DE-PS 27 09 033 beschreibt ein Verfahren zur Extraktion von Kamille mit überkritischen Gasen ; die DE-OS 21 27 596 ein Verfahren zur Gewinnung von pflanzlichen Ölen, bei welchem das Fett mit überkritischen Gasen bevorzugt aus Samen als Rohstoff extrahiert wird. Diesen und anderen Verfahren ist gemeinsam, daß die Inhaltsstoffe aus einem zerkleinerten Rohmaterial mit fester oder formstabiler Konsistenz und großer Oberfläche gewonnen werden ; das Rohmaterial wird zuerst in einem Extraktionsbehälter vorgelegt und die Inhaltsstoffe werden dann von dem hindurchströmenden verdichteten Gas durch Perkolation herausgelöst und weitertransportiert. Die DE-PS 14 93 190 beschreibt ein Verfahren zur Trennung von flüssigen und/oder festen Stoffgemischen mit Hilfe von überkritischen Gasen. Die Extraktion flüssiger Stoffmischungen erfolgt dabei derart, daß die Flüssigkeit in einer Mischstufe nach Art einer Füllkörperkolonne mit dem überkritischen Gas in Kontakt gebracht wird, wobei dieses die Flüssigkeit ganz oder teilweise aufnimmt. Eine andere Ausführungsform besteht darin, daß eine bestimmte Menge des zu trennenden flüssigen Stoffgemisches vorgelegt und die gasförmige Phase zur Beladung in Blasenform durch die Flüssigkeit geleitet wird. Ein unbegrenztes Anwachsen der flüssigen Phase ist, falls erforderlich, durch besondere Maßnahmen zu verhindern. Die DE-AS 23 32 038 beschreibt ein Verfahren zur Desodorierung von fetten Ölen, indem diese unter Verwendung einer Füllkörperkolonne mit dem überkritischen Gas im Gegenstrom in Kontakt gebracht werden. Auch die DE-OS 28 43 920 beschreibt ein Verfahren zur Behandlung von rohen, pflanzlichen fetten Ölen, wobei das Gas fußseitig und das Einsatzgemisch kopfseitig in den Extraktionsautoklaven gepumpt werden.

Es ist bisher keine geeignete Methode bekannt, die eine Anwendung der Hochdruckextraktion auf viskose Medien, steife Pasten oder zähe Massen ermöglicht, die durch starke innere Kohäsionskräfte zusammengehalten werden.

Die Schwierigkeit bei der Extraktion flüssiger oder viskoser, nicht formstabiler Medien besteht in der Schaffung einer großen inneren Oberfläche. Hierzu muß ein bestimmter Betrag an kinetischer Energie aufgebracht werden, der zur Überwindung der Oberflächenenergie des Einsatzmediums dient. Bei dünnflüssigen Medien, wo verhältnismäßig geringe Kohäsionskräfte wirken, reicht unter Umständen die potentielle Energie des Einsatzmediums selbst aus, um beim Herabfließen desselben in einer Füllkörperkolonne die zur Schaffung einer großen Oberfläche benötigte Bewegungsenergie zu liefern. Diese Methode ist jedoch nur in den Fällen geeignet, wo Substrat und Raffinat eine ausreichende flüssige Konsistenz aufweisen. Ist die erzeugte Oberfläche nicht ausreichend und die vorgegebene Säulenpackung nicht dicht genug, besteht die Gefahr, daß das Gas an dem Flüssigkeitsfilm vorbeistreift, ohne sich bis zur maximal möglichen Gleichgewichtskonzentration zu beladen. Ein bloßes Durchleiten des Extraktionsgases durch das Einsatzmedium ist ebenfalls nicht universell verwendbar und von nur geringer Effektivität. Die Zuführung von mechanischer Bewegungsenergie in Form von mechanischer Bewegung des Substrats, z. B. mittels Rührwerk, besitzt den Nachteil, daß solche Maßnahmen unter Druck im technischen Maßstab sehr kosten- und wartungsintensiv sind, viele Einschränkungen, z. B. bezüglich Drehzahl, möglichem Extraktionsdruck usw. mit sich bringen und durch besondere Maßnahmen ein dadurch hervorgerufener mechanischer Weitertransport der Einsatzmischung in den Abscheidungsteil der Anlage verhindert werden muß.

Aufgabe der vorliegenden Erfindung war deshalb die Schaffung eines Verfahrens zur Extraktion von formlabilen fließfähigen Massen, bei dem die vorstehend genannten Nachteile nicht auftreten und das sich auch gut zur Extraktion viskoser und zäher Substrate, die durch starke innere Kohäsionskräfte zusammengehalten werden, eignet. Diese Aufgabe wird durch das erfindungsgemäße Verfahren gelöst.

Gegenstand der Erfindung ist ein Verfahren zur Extraktion formlabiler fließfähiger Massen mit einem verflüssigten oder überkritischen Gas, das dadurch gekennzeichnet ist, daß man die fließfähige Masse und das Extraktionsgas einer Mischkammer, deren Länge ein Vielfaches ihrer Breite bzw. ihres Durchmessers beträgt und die kein Rührwerk aufweist, an einem Ende unter gründlicher Durchmischung zuführt und am entgegengesetzten anderen Ende abzieht, das extrakthaltige Gas in einer Abscheidungsstufe durch Erniedrigung der Dichte entmischt und Extrakt und Raffinat abzieht. Das Verfahren kann dabei chargenweise oder vorzugsweise kontinuierlich durchgeführt werden.

Die formlabilen, fließfähigen Massen können beispielsweise als molekular-disperse Mischung (Lösung), Emulsion oder Dispersion verschiedener Komponenten vorliegen, wobei einzelne Komponenten gasförmig, flüssig oder fest bzw. Extrakt oder Raffinat feste oder flüssige Konsistenz aufweisen können. Die erfindungsgemäße Hochdruckextraktion dient dabei dem Zweck, erwünschte oder unerwünschte Bestandteile aus dem eingesetzten Substrat abzutrennen im Sinne einer Trägerstoff- oder einer Extraktgewinnung oder einer Kombination beider Möglichkeiten. Das Einsatzgemisch kann ferner aus einer fließfähigen Dispersion bestehen, d. h. aus einer mehr oder minder großen Menge feinverteilter Feststoffpartikel, die durch Adhäsionskräfte in einer flüssigen oder viskosen Matrix festgehalten werden. Darüberhinaus können auch Flüssigkeiten in einer wesentlich effektiveren Art und Weise mit dem erfindungsgemäßen Verfahren extrahiert werden, als es dem Stand der Technik entspricht, ebenso wie Feststoffe, die als Staub-Gas-Gemische ein fließfähiges Verhalten einnehmen können. Die jeweilige Konsistenz des Einsatzgemisches kann durch Einstellen einer bestimmten Temperatur in gewissen Grenzen verändert werden. Die entsprechende Temperatur ist unabhängig von derjenigen des Extraktionsgases in der Beladungsstufe und wird nur durch den Erstarrungspunkt des Einsatzguts und seine thermische Beständigkeit begrenzt.

Es wurde gefunden, daß man den Druck des Extraktionsgases selbst in vorzüglicher Weise dazu ausnützen kann, um die zur Erzeugung einer großen Oberfläche benötigte kinetische Energie zu liefern, indem man Extraktionsgas und Einsatzgemisch durch eine Mischkammer führt, d. h. die Beladung in einer Mischkammer durchführt. Als Mischkammer wird dabei eine für derartige Zwecke geeignete Vorrichtung verwendet, die entsprechende Zuleitungen für das Einsatzgemisch und das Extraktgas und einen Auslaß für die Komponenten nach der Extraktion besitzt. Für eine ausreichende Extraktion beträgt die Länge der Mischkammer ein Vielfaches der Breite oder des Durchmessers der Mischkammer, wobei sich dann die Zufuhr für das Einsatzgemisch und das Extraktionsgas an einem Ende, und der Auslaß am entgegengesetzten Ende der Mischkammer befinden. Vorzugsweise wird dabei das Einsatzgemisch (Substrat) und/oder das Extraktionsgas in die Mischkammer eingedüst. In einer Ausführungsform kann die Strömungsrichtung des Extraktionsgases beim Eintritt in die Mischkammer im wesentlichen quer zur Strömungsrichtung des Einsatzgemisches beim Eintritt in die Mischkammer sein.

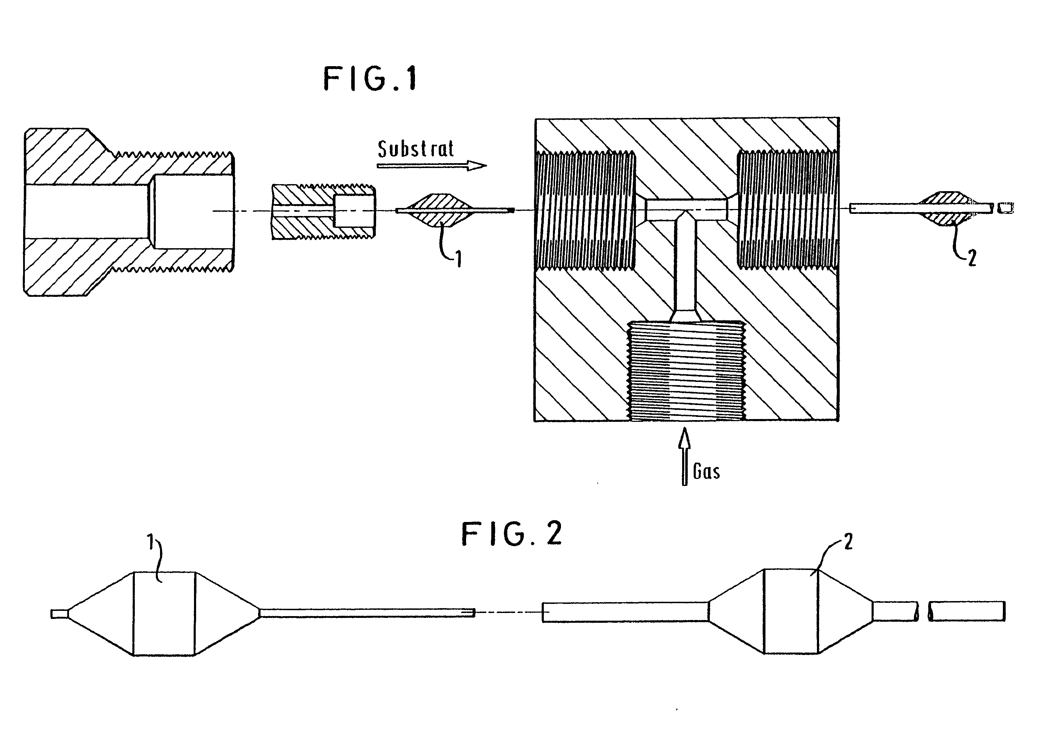

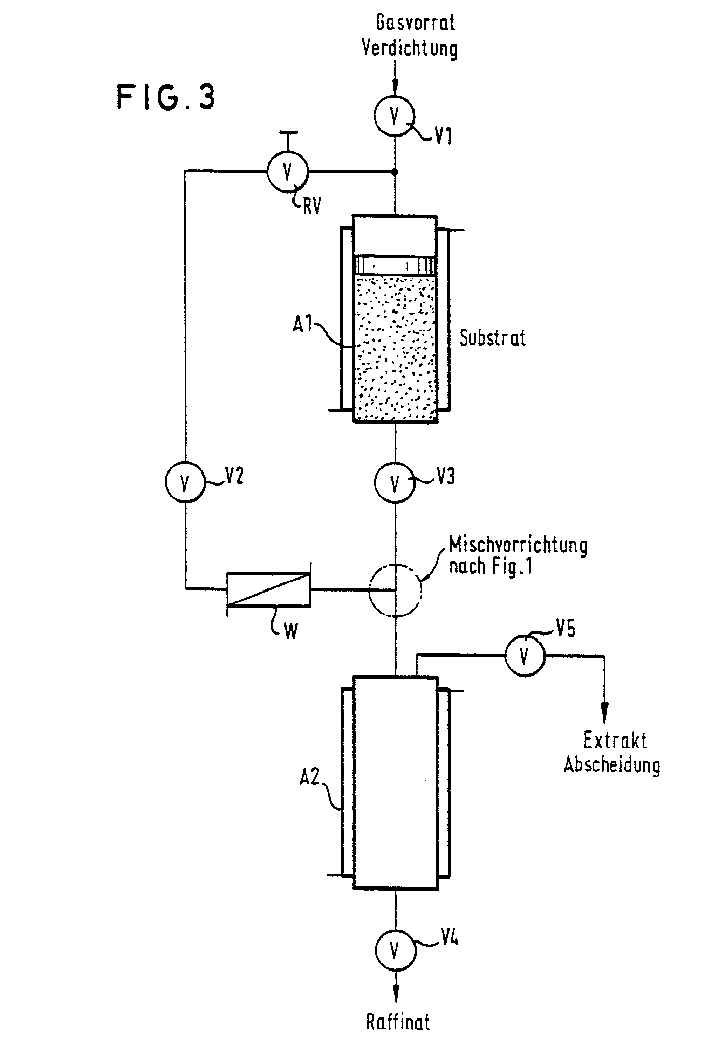

Ganz besonders gute Ergebnisse werden mit einer weiteren Ausführungsform erhalten, bei der das Einsatzgemisch und das Extraktionsgas durch je eine von zwei konzentrisch nach Art einer « Doppelmischdüse » angeordnete, teilweise übereinandergeschobene Düsen, wie z. B. zwei Edelstahlkapillaren, geführt wird. Dieser Aufbau wird anhand der nachfolgenden Figuren 1 und 2 näher erläutert. Mit einer solchen Anordnung werden in der Regel bessere Ergebnisse erhalten als mit einer Mischkammer, bei der nur das Einsatzmedium in die Gasphase oder nur das Extraktionsgas in das fließfähige Einsatzgemisch gespritzt wird.

Durch die erfindungsgemäße bevorzugte Anordnung wird der Druck des Extraktionsgases in Geschwindigkeit, d. h. Bewegungsenergie umgesetzt. Der durch die Querschnittsverengung bedingten Geschwindigkeitszunahme der strömenden verdichteten Gasphase entspricht eine Druckabnahme derselben, die, je nach Ausführungsform der Düse, einen mehr oder minder großen Betrag ausmacht. Zur Extraktion steht folglich der vom Verdichter erzeugte, um diesen Betrag verminderte Druck der verdichteten Gasphase zur Verfügung. Diese Druckabnahme ist in der Regel gegenüber den verwendeten hohen Extraktionsdrücken von geringer Bedeutung und kann sogar, wie anhand der Fig. 3 gezeigt wird, in einer speziellen Ausführungsform des Verfahrens in sinnvoller Weise genutzt werden.

Das fließfähige Substrat wird durch die Kapillare (1) mit geringem Innendurchmesser zugeführt. Dabei hat sich gezeigt, daß viskose Einsatzmedien ohne weiteres durch Kapillaren von beispielsweise nur 200 µm Innendurchmesser bei angemessenem zeitlichem Massendurchsatz hindurchgedrückt werden können. Die genaue Dimensionierung der Kapillare richtet sich nach verschiedenen Gesichtspunkten und kann je nach vorliegendem Fall unterschiedlich sein. Über das ausgangsseitige Ende dieser Substratdüse ist konzentrisch eine zweite Kapillare (2), deren Innendurchmesser nur geringfügig größer bemessen ist als der Außendurchmesser von Kapillare (1), derart geschoben, daß über eine gewisse Wegstrecke, die vorzugsweise nicht geringer als 0,3 cm sein sollte und insbesondere 0,5 bis 2 cm beträgt, eine Überlappung beider Kapillaren vorliegt. Das Extraktionsgas wird nun so zugeführt, daß es durch den hierdurch gebildeten engen ringförmigen Zwischenraum zwischen der Innenwandung des äußeren und der Außenwandung des inneren Kapillarrohrs hindurchströmen muß, wobei hohe Geschwindigkeiten erzeugt werden. An dem Punkt, wo die innere substratzuführende Düse endet, treten starke Verwirbelungen mit unregelmäßig verteiltem Geschwindigkeitsprofil auf. Dadurch werden vorteilhafterweise die zu extrahierenden Massen fein verteilt und allseitig umspült, was sich durch die auftretende Turbulenz der Strömung von selbst ergibt. Aufgrund der intensiven Vermischung und der damit verbundenen hohen Lösungsgeschwindigkeit kann das Gas-Substrat-Gemisch schon nach einer kurzen Extraktionsstrecke innerhalb der Kapillare (2) direkt in einen Hochdruckbehälter geleitet werden, in dem das nicht gelöste Raffinat gesammelt wird, während die mit Extrakt beladene Gasphase weiter in den Abscheidungsteil der Anlage geführt wird.

Die Länge der Extraktionsstrecke hängt in erster Linie von der Geschwindigkeit des Einsatzgemisches und der Geschwindigkeit und dem Druck des Extraktionsgases, vom Durchmesser der Düsen und im Falle einer « Doppelmischdüse » von dem gegenseitigen Verhältnis der Durchmesser ab, weiter von der Art des Einsatzgemisches und des Extraktionsgases ; vorzugsweise beträgt die Länge der Extraktionsstrecke mindestens 3 cm, und insbesondere 6 bis 10 cm.

Im Abscheidungsteil wird in an sich bekannter Weise durch Erniedrigung der Dichte des Extraktionsmittels die Abscheidung des gelösten Extrakts bewirkt. Das regenerierte Gas wird danach in bekannter Weise durch Verdichtung und Thermostatisierung wieder auf den gewünschten Extraktionszustand gebracht und kann nach Art eines Kreispozesses wieder rückgeführt werden.

In der erfindungsgemäß bevorzugten Ausführungsform wird die zur wirkungsvollen Extraktion des fließfähigen Substrats erforderliche große Oberfläche durch einen ersten Schritt oder stufenweise durch die Kombination von zwei sich ergänzenden Wirkungsmechanismen (erster und zweiter Schritt) erzielt. Der erste Schritt zur Oberflächenvergrößerung der formlabilen Masse besteht darin, daß man sie durch eine feine Kapillare preßt, wodurch sich eine fadenförmige Struktur ergibt. Die fadenförmige Masse wird dann in einem zweiten Schritt durch die in der äußeren Kapillare auftretenden Turbulenzen des schnellströmenden Gases in winzig kleine Segmente zerteilt, worauf eine Vermischung der Massenteilchen mit jeweils frischem Extraktionsmittel stattfindet, wodurch eine sehr effektive, gleichbleibend gute Extraktion ohne Zuhilfenahme mechanisch bewegter Bauteile erzielt werden kann.

Die in Fig. 1 dargestellte Anordnung ist eine mögliche Ausführungsform der erfindungsgemäß vorzugsweise verwendeten Mischvorrichtung, die sich in einer Pilotanlage bewährt hat und dem Zweck dient, die prinzipielle Funktionsweise des beanspruchten Verfahrens zu erläutern. In Fig. 1 wird mit (1) die Düse bezeichnet, durch die das Substrat strömt ; mit (2) die über die Düse (1) geschobene und diese teilweise überlappende Düse, in die das Extraktionsgas eintritt. Fig. 2 zeigt eine größere Einzeldarstellung der Düsen (Kapillaren) (1) und (2). Der Innendurchmesser der Düse (1) beträgt in der Regel 100 bis 1 000 μm, insbesondere 100 bis 400 μm. Der Innendurchmesser der Düse (2) ist in der Regel nur geringfügig größer bemessen als der Außendurchmesser der Düse (1) ; er beträgt vorzugsweise 250 bis 1 200 μm, und insbesondere 250 bis 700 μm. Die Wegstrecke, in der sich die beiden Düsen (1) und (2) überlappen, hat den Zweck, durch Querschnittsverengung den Druck des Extraktionsgases teilweise in Geschwindigkeit, d. h. Bewegungsenergie umzusetzen. In der Regel beträgt die Überlappungsstrecke, die möglichst klein sein soll, 0,3 bis 4 cm, insbesondere 0,5 bis 2 cm. Für die so erzielte Umsetzung von Druck in Bewegungsenergie ist vor allem die Querschnittsverengung ausschlaggebend.

In einer anderen Ausführungsform können vorteilhafterweise viele solcher Düsen parallel angeordnet werden. Eine einzige Realisierung mit einer einzigen zentralen Gaszuführung ist z. B. dadurch denkbar, daß die Funktion der Düse (2) durch eine massive Lochplatte mit feinen parallelen Bohrungen übernommen wird, in die jeweils die substratführenden feinen Kapillaren (1) ein Stück hineingeschoben werden.

Gegenstand der Anmeldung ist deshalb auch eine Mischvorrichtung der vorstehend beschriebenen Art zur Verwendung in dem erfindungsgemäßen Extraktionsverfahren.

Die Fig. 3 stellt zur näheren Erläuterung eine Ausführungsform des Hauptteils einer Extraktionsanlage dar, welche die erfindungsgemäße, in Fig. 1 und 2 dargestellte Misch- und Extraktionsstufe als Bestandteil enthält und zur Extraktion viskoser Medien geeignet ist. Druckerzeugung und -regulierung einschließlich Gasvorratsbehälter, Kompressor oder Pumpe, Regel- und Absperrventilen usw. sind nicht abgebildet, da es sich hierbei um aus dem Stand der Technik an sich bekannte Maßnahmen handelt. Ebenso wurde auf die Darstellung des an sich bekannten Abscheidungsteils (ein- oder mehrstufig) der Hochdruckanlage mit anschließender Gasrückführung verzichtet.

Von dem Verdichter her gelangt da komprimierte Gas über das Absperrventil V1 in die Anlage und übt dort einerseits, eventuell über einen beweglichen Kolben, einen Druck auf das zu extrahierende Substrat aus, das sich in einem gegebenenfalls thermostatisierbar ausgeführten Autoklaven A1 befindet. Andererseits strömt das Gas über das Absperrventil V2 und den Wärmeaustauscher W, der die Extraktionstemperatur T bestimmt, in die beanspruchte Misch- und Extraktionsstufe entsprechend Abbildung 1 und 2, belädt sich mit extrahierbaren Stoffen und führt das Extrakt direkt über den Druckbehälter A2 und das Absperrventil V5 dem Abscheidungsteil der Anlage zu. Der als Raffinat bezeichnete nicht im Extraktionsmittel lösliche Anteil des Substrats verbleibt im Druckbehälter A2 und kann hieraus chargenweise oder kontinuierlich über das fußseitig angebrachte Absperrventil V4 abgezogen werden. Der Autoklav A2 übt demnach in gewissem Sinn die Funktion eines Abscheiders aus, wenngleich das Raffinat nicht von dem Lösungsmittel aufgenommen worden ist.

Zur Durchführung wird durch Öffenen der Ventile V1 und V2 im Autoklaven A2 zuerst der vorgegebene Druck eingestellt, dann wird das Ventil V5 geöffnet und die gewünschte Zirkulationsgeschwindigkeit der verdichteten Gasphase vorgegeben. Anschließend öffnet man das Ventil V3, so daß der Zutritt des in A1 befindlichen zu extrahierenden Substrats möglich ist. In den meisten Fällen reicht die beschriebene durch den Düseneffekt verursachte Druckdifferenz zwischen A1 und A2, die abhängig von der Strömungsgeschwindigkeit des verdichteten Gases ist, aus, um den Zufluß des viskosen Einsatzgemisches zu bewirken. Ein verstärkter Zufluß kann durch den Einbau eines Reduzierventils RV gemäß Abbildung 3 herbeigeführt werden, mit dessen Hilfe die vorhandene geringe Druckdifferenz weiter vergrößert werden kann. Es ist lediglich darauf zu achten, daß das Verhältnis des zugeführten Massenstroms an Substrat zu dem zugeführten Massenstrom an Extraktionsmittel so bemessen ist, daß das verdichtete Gas entsprechend seiner durch Druck und Temperatur bedingten Aufnahmefähigkeit die Möglichkeit hat, die gewünschten Komponenten zu lösen und dadurch von dem Einsatzgemisch abzutrennen.

In Abweichung von Abbildung 3 wird im technischen Maßstab das Einsatzgemisch vorzugsweise kontinuierlich mit Hilfe einer Dosiereinheit zugegeben, die als Membranpumpe ausgeführt sein kann oder aus zwei parallel geschalteten langhubigen Spindelpumpen bestehen kann, die mit Hilfe einer Steuerung so geregelt sind, daß jeweils die eine den Druckhub ausführt, während die andere für den nächsten Druckhub neu beladen wird.

Mit Hilfe der beschriebenen Vorrichtung ist die Hochdruckextraktion flüssiger und viskoser Medien oder anderer fließfähiger Einsatzgemische auch mit viskoser oder fester Raffinatphase in einer einfachen Weise möglich, die ohne Einsatz eines mechanischen Rührers und die damit verbundenen Investitions- und Betriebskosten eine wesentlich effektivere Vermischung und Extraktion des Einsatzguts mit verdichteten Gasen erlaubt, als es nach dem bisherigen Stand der Technik möglich war.

Der Ablauf der Extraktion kann dabei nicht mit den üblichen Hochdruckverfahren verglichen werden, die im Normalfall einen Extraktionsautoklaven benötigen und bei welchen die Extraktion die Perkolation des Substrats mit verdichteten Gasen als Lösungsmittel darstellt. Diese Verfahren besitzen daher einen zeitlichen Extraktionsgradienten, indem etwa zu Beginn der Extraktion die Gasphase mit den leichter löslichen Stoffen und gegen Ende zunehmend mit Anteilen schwerer löslicher Komponenten beladen ist. Gleichzeitig wird zwar anfangs die den Extraktionsbedingungen entsprechende maximal mögliche Beladung der Gasphase erreicht, mit zunehmender Erschöpfung des Einsatzgemisches sinkt jedoch die Stoffmenge in der Gasphase und damit die Effizienz des Verfahrens. Diesen Nachteil versucht man oft durch Hintereinanderschalten mehrerer Extraktionsbehälter mit unterschiedlichem Extraktionsgrad auszugleichen. Im Gegensatz hierzu wird bei dem erfindungsgemäßen Verfahren nicht ein Extraktionsautoklav im üblichen Sinn verwendet ; die Beladung der Gasphase erfolgt vielmehr in einer Mischkammer und vorzugsweise in einem kleinen Volumenabschnitt davon, und insbesondere innerhalb oder im Anschluß an die beschriebene « Doppelmischdüse ». Daraus ergibt sich ein Extraktionsverlauf, der als zeitliche Abfolge einer Vielzahl von Mikroextraktionen differentiell kleiner Massenanteile des Einsatzgemisches aufgefaßt werden kann. Alle Mikroextraktionen haben den gleichen, nur vom Zustand und Lösungsvermögen der verdichteten Gasphase abhängigen Extraktionsgrad. Man erhält daher eine Extraktphase, die während des gesamten Extraktionsverlaufs qualitativ und quantitativ konstant ist und immer dem Maximalwirkungsgrad des Verfahrens entspricht.

Druck und Temperatur der Beladungsstufe sowie auch der Abscheidungsstufe richten sich insbesondere nach dem zur Extraktion verwendeten verflüssigten oder überkritischen Gas und nach den zu extrahierenden Stoffen. So werden für die Extraktion von Rohlecithin mit $CO_2$ folgende Bedingungen angewendet : In der Beladungsstufe arbeitet man vorzugsweise bei einem Druck von 600 bis 1 200, und insbesondere von 800 bis 1 000 bar, und vorzugsweise bei einer Temperatur von 70 bis 150 °C, insbesondere von 80 bis 100 °C. Der Druck der Abscheidungsstufe beträgt vorzugsweise 40 bis 120 bar, insbesondere 40 bis 80 bar ; die Temperatur vorzugsweise 30 bis 120 °C, und insbesondere 40 bis 80 °C.

Als Extraktionsgas in verflüssigtem oder überkritischem Zustand kann in der Regel jedes für Hochdruckextraktionen bekannte Gas verwendet werden, wobei vorzugsweise ungefährliche und leicht zuhandhabende, umweltfreundliche, kostengünstige, und, abhängig von der Art und Verwendung der Raffinate und Extrakte insbesondere auch gesundheitlich unbedenkliche Gase eingesetzt werden. Erfindungsgemäß bevorzugte Gase sind Alkane oder Alkene mit eins bis drei Kohlenstoffatomen, wie z. B. Methan, Ethan, Propan, Ethen, deren partiell oder vollständig fluorierte Derivate, wie z. B. Mono-, Di- oder Trifluormethan Mono-, Di-, Tri-, Tetra-, Penta- oder Hexafluorethan usw., Difluorethylen, Tetrafluorethylen usw., $N_2O$, $SF_6$, Argon, Stickstoff, und insbesondere Kohlendioxid. Es kann mit einem einzelnen Gas oder auch mit einer Mischung von zwei oder mehreren Gasen gearbeitet werden. Die Gase können im überkritischen oder im verflüssigten Zustand eingesetzt werden.

Als repräsentative Beispiele für die große Zahl der Anwendungsmöglichkeiten des erfindungsgemäßen Extraktionsverfahrens werden genannt : Extraktion von Vaseline zur Abtrennung von kanzerogenen Begleitstoffen, beispielsweise von polykondensierten Aromaten, Extraktion von Wollwachs zur Entfernung von Pestiziden, polychlorierten Kohlenwasserstoffen, Allergenen, freien Fettsäuren usw., Extraktion von Lupinenöl zur Entfernung der enthaltenen giftigen Chinolizidinalkaloide usw., und insbesondere die Extraktion von Rohlecithin.

Am Beispiel der Extraktion von Rohlecithin mit Kohlendioxid sollen nochmals die mit dem erfindungsgemäßen Verfahren erzielbaren Vorteile gegenüber dem Stand der Technik aufgezeigt werden : Aus der DE-OS 30 11 185 ist ein Verfahren zur Gewinnung von für physiologische Zwecke direkt verwendbarem Reinlecithin durch Extraktion mit überkritischen Gasen bekannt. Dieses Verfahren ist jedoch zur extraktiven Entölung von Rohlecithin sehr nachteilig, und in technischem Maßstab praktisch undurchführbar, da sich schon bei einem geringen Extraktionsgrad die Oberfläche des vorgelegten Rohlecithins mit einer gummiartigen Schicht überzieht, die jeden weiteren Angriff des überkritischen Lösungsmittels unmöglich macht oder zumindest in seiner Effizienz stark abschwächt. Erfindungsgemäß kann die Extraktion von Rohlecithin — ein Anwendungsfall mit viskosem Substrat (Rohlecithin), festem Raffinat (Reinlecithin) und flüssigem Extrakt (fettes Öl) — hingegen schnell, wirkungsvoll und vollständig ausgeführt werden. In der DE-OS 30 11 185 wird bei Kohlendioxid als Extraktionsmittel die Extraktion bei einem Druck im Bereich von 72 bis 800 bar, vorzugsweise von 200 bis 500 bar, insbesondere von 300 bis 400 bar, und bei Temperaturen von vorzugsweise 35 bis 80 °C, insbesondere von 40 bis 60 °C, durchgeführt. Erfindungsgemäß wird in einer Pilotanlage eine vollständige und schnelle Extraktion des Rohlecithins jedoch besonders gut im Druckbereich von 700 bis 1 200 bar und bei Temperaturen oberhalb von 70 °C erreicht. Diese erfindungsgemäßen Extraktionsbedingungen erlauben nicht nur eine vollständige und schnelle Entölung des Rohlecithins, sondern besitzen gleichzeitig den Vorteil, daß zusammen mit dem Öl die Hauptmenge der enthaltenen Farbstoffe, wie z. B. die Carotinoide mitextrahiert werden, so daß sich als Raffinat ein farblich sehr helles Reinlecithin ergibt. Die Phospholipide selbst sind auch bei den angegebenen hohen Druck- und Temperaturwerten nahezu unlöslich und nur in Spuren in dem intensiv dunkelgelb gefärbten extrahierten Öl enthalten. Die höhere Temperaturbelastung übt in keiner Weise einen qualitätsvermindernden Einfluß auf das erhaltene Reinlecithin aus, da die erhöhte Temperatur ausschließlich unter Kohlendioxid als Schutzgasatmosphäre wirksam ist. Schließlich wurde gefunden, daß bei Ausführung der Hochdruckextraktion gemäß dem erfindungsgemäßen Verfahren unter den angegebenen Bedingungen das Reinlecithin direkt in gleichmäßig pulverförmiger und streubarer Form gewonnen werden kann, und daher farblich sowie konsistenzmäßig unmittelbar dem bisher bekannten pulverförmigen ölfreien Reinlecithin entspricht oder überlegen ist. Der entscheidende Vorteil des erfindungsgemäßen Verfahrens besteht darin, daß in einem einzigen Schritt ausgehend von dem Rohprodukt unmittelbar ein entöltes, helles, streubares, hochwertiges und direkt verwendbares Reinprodukt erhalten werden kann. Es wird also die Vielzahl von Verfahrenschritten vermieden, die nach dem bisherigen Stand der Technik zum Entölen, Reinigen, Entfernen von Lösungsmittelresten, Trocknen, Pulverisieren uzw. notwendig war, um aus Rohlecithin ein vergleichbares hochwertiges Reinprodukt zu erhalten. Damit verbunden ist eine entsprechende Verminderung der Aufwendungen für Apparaturen (Investitionskosten), Betrieb und Wartung derselben (Personal- und Energiekosten) sowie eine Herabsetzung von Substanzverlusten durch Raffination.

In den nachfolgenden Beispielen wird die Erfindung näher erläutert, ohne sie darauf zu beschränken. Sofern nicht anders angegeben, beziehen sich Prozentangaben auf Gewichtsprozente.

Beispiel 1

Es wurde unter Verwendung einer Pilotanlage des in den Abbildungen 1, 2 und 3 dargestellten Aufbaus gearbeitet. Die Mischvorrichtung war mit einer Substratdüse (1) von 200 μm Innendurchmesser und 450 μm Außendurchmesser versehen. Der Innendurchmesser der Düse (2) betrug 600 μm. In den Autoklaven A1, der mit einem beweglichen Zylinder versehen, jedoch nicht thermostatisiert war und sich auf Zimmertemperatur befand, wurden 50 g Rohlecithin eingefüllt. Der Wärmeaustauscher W, die Doppelmischdüse sowie der Autoklav A2 wurden auf eine Temperatur von 90 °C eingestellt, der Extraktionsdruck des $CO_2$ auf 920 bar. Die Entmischung des Extrakts wurde einstufig bei einem Druck von 60 bar und einer Temperatur von 60 °C bewirkt. Nach Öffnen von Ventil V3 erfolgte die Zugabe des vorgelegten Rohlecithins innerhalb von einer Stunde ohne jede weitere Maßnahme. Nach erfolgter Zugabe konnten dem Autoklaven A2 etwa 32,5 g eines hellen, pulverförmigen Reinlecithins entnommen werden, während sich in dem Abscheidungsteil etwa 17,5 g eines nahezu klaren, intensiv gelb gefärbten Öls befanden. Die Bestimmung des Lecithinanteils in dem extrahierten Öl ergab einen Wert von 4 %, der zum Teil durch Mitreißeffekte des strömenden Gases in der verwendeten Apparatur bedingt war. Der Ölgehalt des eingesetzten Rohlecithins betrug 35 % und konnte durch die Extraktion auf einen Wert von nur 1,5 % gesenkt werden. Ein käufliches, pulverförmiges, raffiniertes und hochwertiges Reinlecithin besitzt zum Vergleich einen Restölanteil von 2 %.

Beispiel 2

Die Mischvorrichtung (Abbildung 1 und 2) wurde mit einer Substratdüse (1) von 105 μm Innendurchmesser und 200 μm Außendurchmesser bestückt. Als Düse (2) wurde eine Edelstahlkapillare mit 260 μm Innendurchmesser gewählt. Das Einsatzgut war ein stark bitter schmeckendes Rohöl aus Lupinensamen mit einem Gehalt an Chinolizidinalkaloiden von 2,8 %. Zunächst wurde ein definierter Gaskreislauf eingestellt, wobei das $CO_2$ als Extraktionsmittel in der Misch- und Extraktionsstufe einen Zustand von 90 bar und 40 °C besaß. Danach wurde das Lupinenöl mit Hilfe einer Flüssigkeitsmembranpumpe über die Substratdüse (1) in den Gaskreislauf dosiert. In der Mischstufe wurde dann das Öl intensiv mit dem Extraktionsmittel verwirbelt, so daß die enthaltenen, unter den gewählten Bedingungen leicht löslichen freien Alkaloidbasen in die Gasphase aufgenommen und zusammen mit einem geringen Teil anderer Ölkomponenten in den Abscheidungsbehälter der Anlage transportiert wurden. Hier wurden die gelösten Stoffe durch Entspannen des $CO_2$ in den gasförmigen Zustand von 60 bar und 40 °C abgeschieden. Der Großteil des zugeführten Öls wurde vorteilhafterweise nicht im überkritischen Gas gelöst, sondern gelangte unmittelbar in den Autoklaven A2 (ebenfalls 40 °C), aus dem er in raffinierter Form direkt wieder kontinuierlich über das fußseitige Ventil abgezogen werden konnte.

Während des Versuchsablaufs wurden 6 % des zugeführten Rohöls über die Gasphase in den Abscheidungsbehälter transportiert, wobei fast die Hälfte dieses Extrakts aus Alkaloiden bestand. Der Hauptteil von 94 % war ein gereinigtes Lupinenöl, das nur noch einen Alkaloidgehalt von 0,05 % sowie eine gegenüber dem eingesetzten Rohprodukt herabgesetzte Säurezahl aufwies.

**Patentansprüche**

1. Verfahren zur Extraktion formlabiler, fließfähiger Massen mittels Hochdruckextraktion mit einem verflüssigten oder überkritischen Gas, dadurch gekennzeichnet, daß man die fließfähige Masse und das Extraktionsgas einer Mischkammer, deren Länge ein Vielfaches ihrer Breite bzw. ihres Durchmessers beträgt und die kein Rührwerk aufweist, an einem Ende unter gründlicher Durchmischung zuführt und am entgegengesetzten anderen Ende abzieht, das extrakthaltige Gas in einer Abscheidungsstufe durch Erniedrigung der Dichte entmischt und Extrakt und Raffinat abzieht.

2. Verfahren nach Anspruch 1, dadurch gekennzeichnet, daß man das Einsatzgemisch (Substrat) und/oder das Extraktionsgas in die Mischkammer eindüst.

3. Verfahren nach Anspruch 2, dadurch gekennzeichnet, daß die Strömungsrichtung des Extraktionsgases beim Eintritt in die Mischkammer quer zur Strömungsrichtung des Einsatzgemisches beim Eintritt in die Mischkammer ist.

4. Verfahren nach Anspruch 1, dadurch gekennzeichnet, daß man das Einsatzgemisch und das Extraktionsgas durch zwei konzentrisch angeordnete teilweise übereinandergeschobene Düsen mit unterschiedlichem Durchmesser führt.

5. Verfahren nach Anspruch 4, dadurch gekennzeichnet, daß das Einsatzgemisch durch eine Düse (1) in eine konzentrisch darübergeschobene, die Düse (1) teilweise überlappende Düse (2) eingedüst wird, durch die das Extraktionsgas in der gleichen Richtung strömt.

6. Verfahren nach einem der Ansprüche 1 bis 5, dadurch gekennzeichnet, daß in einem ausgangsseitigen Teil der Mischkammer oder Mischdüse durch Turbulenzen eine intensive Vermischung des Gases mit dem feinverteilten Einsatzgemisch (Substrat) stattfindet.

7. Verfahren nach einem der Ansprüche 1 bis 6, dadurch gekennzeichnet, daß man das Extrakt und/oder Raffinat kontinuierlich abzieht.

8. Verfahren nach einem der Ansprüche 1 bis 7, dadurch gekennzeichnet, daß man das Extraktionsgas regeneriert und wieder in die Extraktion zurückführt

9. Verfahren nach einem der Ansprüche 1 bis 8, dadurch gekennzeichnet, daß man als Extraktionsmittel Kohlendioxid, Alkane oder Alkene mit eins bis drei Kohlenstoffatomen, deren partiell oder vollständig fluorierte Derivate, $N_2O$, $SF_6$, Argon und/oder Stickstoff verwendet.

10. Verfahren nach einem der Ansprüche 1 bis 9, dadurch gekennzeichnet, daß man zur Extraktion von Rohlecithin mit $CO_2$ in der Beladungsstufe bei einem Druck von 600 bis 1 200 bar, insbesondere von 800 bis 1 000 bar, arbeitet.

11. Verfahren nach Anspruch 10, dadurch gekennzeichnet, daß man in der Beladungsstufe bei einer Temperatur von 70 bis 150 °C, insbesondere von 80 bis 100 °C arbeitet.

12. Verfahren nach einem der Ansprüche 1 bis 11, dadurch gekennzeichnet, daß man in der Abscheidungsstufe bei einem Druck von 40 bis 120 bar, insbesondere von 40 bis 80 bar arbeitet.

13. Verfahren nach einem der Ansprüche 1 bis 12, dadurch gekennzeichnet, daß man in der Abscheidungsstufe bei einer Temperatur von 30 bis 120 °C, insbesondere von 40 bis 80 °C arbeitet.

14. Mischvorrichtung zur Verwendung in einem Extraktionsverfahren nach einem der Ansprüche 1 bis 13, bestehend aus zwei konzentrisch angeordneten sich teilweise überlappenden Kapillaren (1) und (2) mit unterschiedlichem Durchmesser.

15. Mischvorrichtung nach Anspruch 14, dadurch gekennzeichnet, daß der Innendurchmesser der inneren Kapillare (1) 100 bis 1 000 μm, insbesondere 100 bis 400 μm beträgt.

16. Mischvorrichtung nach einem der Ansprüche 14 oder 15, dadurch gekennzeichnet, daß der Innendurchmesser der äußeren Kapillare (2) 250 bis 1 200 μm, insbesondere 250 bis 700 μm beträgt.

17. Mischvorrichtung nach einem der Ansprüche 14 bis 16, dadurch gekennzeichnet, daß die Überlappungsstrecke 0,3 bis 4, insbesondere 0,5 bis 2 cm beträgt.

18. Mischvorrichtung nach einem der Ansprüche 14 bis 17, dadurch gekennzeichnet, daß die Kapillare (2) über das ausgangsseitige Ende der Kapillare (1) 3 bis 15, insbesondere 6 bis 10 cm hinausragt.

19. Mischvorrichtung nach einem der Ansprüche 14 bis 18, dadurch gekennzeichnet, daß sie aus einer Vielzahl von parallel angeordneten sich überlappenden Kapillaren (1) und (2) besteht.

20. Mischvorrichtung nach Anspruch 18, dadurch gekennzeichnet, daß die parallel angeordneten Kapillaren (2) aus einer Lochplatte mit parallelen Bohrungen gebildet werden, in deren Bohrungen die Kapillaren (1) eingeschoben sind.

## Claims

1. Process for the extraction of form-labile, flowable masses by means of high pressure extraction with a liquefied or supercritical gas, characterised in that one conveys the flowable mass and the extraction gas to a mixing chamber, the length of which is a multiple of its breadth or of its diameter and which does not have stirring means, at one end with thorough mixing up and removes from the opposite end, separates the extract-containing gas in a separation step by lowering the density and removes extract and raffinate.

2. Process according to claim 1, characterised in that one sprays the starting mixture (substrate) and/or the extraction gas into the mixing chamber.

3. Process according to claim 2, characterised in that the direction of flow of the extraction gas upon entry into the mixing chamber is transverse to the direction of flow of the starting mixture upon entry into the mixing chamber.

4. Process according to claim 1, characterised in that one conveys the starting mixture and the extraction gas through two concentrically arranged nozzles of differing diameter which are partly pushed over one another.

5. Process according to claim 4, characterised in that the starting mixture is sprayed in through a nozzle (1) in a second concentric nozzle (2), pushed thereover and partly overlapping the nozzle (1) through which the extraction gas flows in the same direction.

6. Process according to one of claims 1 to 5, characterised in that, in a part of the mixing chamber or mixing nozzle on the outlet side, there takes place by turbulence an intensive mixing of the gas with the finely divided starting mixture (substrate).

7. Process according to one of claims 1 to 6, characterised in that one withdraws the extract and/or raffinate continuously.

8. Process according to one of claims 1 to 7, characterised in that one regenerates the extraction gas and again returns to the extraction.

9. Process according to one of claims 1 to 8, characterised in that, as extraction agent, one uses carbon dioxide, alkanes or alkenes with one to three carbon atoms, the partly or wholly fluorinated derivatives thereof, $N_2O$, $SF_6$, argon and/or nitrogen.

10. Process according to one of claims 1 to 9, characterised in that, for the extraction of crude lecithin, one works with $CO_2$ in the loading step at a pressure of 600 to 1 200 bar, especially of 800 to 1 000 bar.

11. Process according to claim 10, characterised in that, in the loading step, one works at a temperature of 70 to 150 °C, especially of 80 to 100 °C.

12. Process according to one of claims 1 to 11, characterized in that, in the separation step, one works at a pressure of 40 to 120 bar, especially of 40 to 80 bar.

13. Process according to one of claims 1 to 12, characterised in that, in the separation step, one works at a temperature of 30 to 120 °C, especially of 40 to 80 °C.

14. Mixing device for use in an extraction process according to one of claims 1 to 13, consisting of two concentrically arranged, partly overlapping capillaries (1) and (2) with differing diameter.

15. Mixing device according to claim 14, characterised in that the internal diameter of the inner capillary (1) is 100 to 1 000 μm, especially 100 to 400 μm.

16. Mixing device according to one of claims 14 or 15, characterised in that the internal diameter of the outer capillary (2) is from 250 to 1 200 μm, especially 250 to 700 μm.

17. Mixing device according to one of claims 14 to 16, characterised in that the overlapping stretch is 0.3 to 4, especially 0.5 to 2 cm.

18. Mixing device according to one of claims 14 to 17, characterised in that the capillary (2) projects over the outlet end of the capillary (1) 3 to 15, especially 6 to 10 cm.

19. Mixing device according to one of claims 14 to 18, characterised in that it consists of a plurality of parallel arranged, overlapping capillaries (1) and (2).

20. Mixing device according to claim 18, characterised in that the parallel arranged larger capillaries (2) are formed from a holed plate with parallel bores into the bores of which are inserted the capillaries (1).

## Revendications

1. Procédé d'extraction de masses fluides instables par extraction haute pression à l'aide d'un gaz liquéfié ou surcritique, caractérisé par le fait que la masse fluide et le gaz d'extraction sont délivrés avec brassage intime à une extrémité, et prélevés à l'extrémité opposée d'une chambre de mélangeage dont la longueur représente un multiple de sa largeur ou de son diamètre et qui ne comporte aucun agitateur ; le gaz renfermant du produit d'extraction étant dissocié dans un étage séparateur, par abaissement de la densité ; et du produit d'extraction et du produit de raffinage étant recueillis.

2. Procédé selon la revendication 1, caractérisé par le fait que le mélange de charge (substrat) et/ou le gaz d'extraction sont pulvérisés dans la chambre de mélangeage.

3. Procédé selon la revendication 2, caractérisé par le fait que la direction de l'écoulement du gaz d'extraction à l'entrée dans la chambre de mélangeage est perpendiculaire à la direction de l'écoulement du mélange de charge à l'entrée dans la chambre de mélangeage.

4. Procédé selon la revendication 1, caractérisé par le fait que le mélange de charge et le gaz d'extraction sont guidés par l'intermédiaire de deux buses de diamètres différents, disposées concentriquement et partiellement enfilées l'une sur l'autre.

5. Procédé selon la revendication 4, caractérisé par le fait que le mélange de charge est pulvérisé, par l'intermédiaire d'une buse (1), dans une buse (2) qui est enfilée concentriquement sur la buse (1) en la chevauchant partiellement, et par laquelle le gaz d'extraction s'écoule dans la même direction.

6. Procédé selon l'une des revendications 1 à 5, caractérisé par le fait qu'un mélangeage intensif du gaz avec le mélange de charge (substrat) finement réparti a lieu, par turbulences, dans une partie de la chambre de mélangeage ou buse de mélangeage située côté sortie.

7. Procédé selon l'une des revendications 1 à 6, caractérisé par le fait que le produit d'extraction et/ou le produit de raffinage sont soutirés en continu.

8. Procédé selon l'une des revendications 1 à 7, caractérisé par le fait que le gaz d'extraction est régénéré, puis réintroduit à nouveau dans l'extraction.

9. Procédé selon l'une des revendications 1 à 8, caractérisé par le fait qu'on utilise, en tant que moyen d'extraction, du dioxyde de carbone, des alcanes ou des alcènes avec un à trois atomes de carbone, leurs dérivés partiellement ou intégralement fluorés, $N_2O$, $SF_6$, de l'argon et/ou de l'azote.

10. Procédé selon l'une des revendications 1 à 9, caractérisé par le fait que, pour l'extraction de lécithine brute avec du $CO_2$, l'on travaille, à l'étage de chargement, sous une pression comprise entre 600 et 1 200 bar, en particulier entre 800 et 1 000 bar.

11. Procédé selon la revendication 10, caractérisé par le fait qu'on travaille, à l'étage de chargement, à une température de 70 à 150 °C, en particulier de 80 à 100 °C.

12. Procédé selon l'une des revendications 1 à 11, caractérisé par le fait qu'on travaille, à l'étage de séparation, sous une pression de 40 à 120 bar, en particulier de 40 à 80 bar.

13. Procédé selon l'une des revendications 1 à 12, caractérisé par le fait qu'on travaille, à l'étage de séparation, à une température de 30 à 120 °C, en particulier de 40 à 80 °C.

14. Dispositif mélangeur destiné à être utilisé dans un procédé d'extraction selon l'une des revendications 1 à 13, comprenant deux capillaires (1 et 2) de diamètres différents, disposés concentriquement et se chevauchant en partie.

15. Dispositif mélangeur selon la revendication 14, caractérisé par le fait que le diamètre interne du capillaire intérieur (1) mesure de 100 à 1 000 μm, en particulier de 100 à 400 μm.

16. Dispositif mélangeur selon l'une des revendications 14 ou 15, caractérisé par le fait que le diamètre interne du capillaire extérieur (2) mesure de 250 à 1 200 μm, en particulier de 250 à 700 μm.

17. Dispositif mélangeur selon l'une des revendications 14 à 16, caractérisé par le fait que la distance de chevauchement mesure de 0,3 à 4, en particulier de 0,5 à 2 cm.

18. Dispositif mélangeur selon l'une des revendications 14 à 17, caractérisé par le fait que le capillaire (2) fait saillie de 3 à 15, en particulier de 6 à 10 cm au-delà de l'extrémité du capillaire (1) située côté sortie.

19. Dispositif mélangeur selon l'une des revendications 14 à 18, caractérisé par le fait qu'il comprend un grand nombre de capillaires (1 et 2) disposés parallèlement et se chevauchant.

20. Dispositif mélangeur selon la revendication 18, caractérisé par le fait que les capillaires (2) disposés parallèlement sont formés par une plaque perforée présentant des trous parallèles, dans les trous de laquelle les capillaires (1) sont enfoncés.

# FIG.1

Substrat

Gas

# FIG.2

0 137 214

# FIG.3

Gasvorrat
Verdichtung

V1

RV

A1

Substrat

V2

V3

Mischvorrichtung
nach Fig.1

W

V5

Extrakt
Abscheidung

A2

V4

Raffinat